# EUROPÄISCHE PATENTANMELDUNG

(11) **EP 4 075 618 A1**
(43) Veröffentlichungstag der Anmeldung: **19.10.2022**
(21) Anmeldenummer: 21211977.0
(22) Anmeldetag: 02.12.2021
(51) Int. Cl.: H02H 3/087, H02H 3/02

(54) **TRENNSCHALTUNG ZUR REVERSIBLEN GALVANISCHEN TRENNUNG EINES VERBRAUCHERS VON EINER GLEICHSPANNUNGSQUELLE**

(30) Priorität: 14.04.2021 DE 102021109345
(71) Anmelder: Marquardt GmbH, 78604 Rietheim-Weilheim (DE)
(72) Erfinder: WALECZEK, Henryk, 26316 Varel (DE); HORZELLA, Jan, 78582 Balgheim (DE)
(74) Vertreter: Staeger & Sperling Partnerschaftsgesellschaft mbB

(57) **Zusammenfassung**

Die Erfindung betrifft eine Trennschaltung (1) zur reversiblen galvanischen Trennung eines Verbrauchers (3) von einer Gleichspannungsquelle (4), welche durch elektrische Leiter (5) miteinander verbunden sind, mit zwei als Feldeffekttransistoren ausgebildeten Leistungselektronik-Schaltern (11, 11'), welche ausgebildet sind, einen durch die zumindest zwei Leiter (5) zwischen dem Verbraucher (3) und der Gleichspannungsquelle (4) gebildeten Stromkreis lastfrei zu schalten, jeweils ein Schaltelement (12) je Leiter (5), welches jeweils ausgebildet ist, den jeweiligen Leiter (5) galvanisch zu unterbrechen, eine Überstromerkennungseinheit (13), welche ausgebildet ist, einen über die Leiter (5) fließenden Überstrom zu erkennen und eine Steuereinheit (14), welche ausgebildet ist, den Stromkreis mittels den Leistungselektronik-Schaltern (11, 11') lastfrei zu schalten und anschließend den Verbraucher (3) durch Unterbrechung der zumindest zwei elektrischen Leiter (5) mittels dem jeweiligen Schaltelement (12) galvanisch von der Gleichspannungsquelle (4) zu trennen, wobei die Leistungselektronik-Schalter (11, 11') entgegengesetzte Durchlassrichtungen aufweisen, sodass der Stromkreis bei einem generatorischen Betrieb des Verbrauchers lastfrei schaltbar ist.

Fig. 2

## Beschreibung

Die Erfindung betrifft eine Trennschaltung zur reversiblen galvanischen Trennung eines Verbrauchers von einer Gleichspannungsquelle, eine Schaltbox umfassend zumindest eine Trennschaltung sowie ein Verfahren zur reversiblen galvanischen Trennung des Verbrauchers von der Gleichspannungsquelle mittels der Trennschaltung.

Kommt es beispielsweise bei Fahrzeugen und insbesondere bei elektrisch angetriebenen Fahrzeugen zu einem Fehler- oder Crashfall, besteht das Bedürfnis, elektrische Verbraucher - wie beispielsweise einen Motor - von einer Spannungsquelle bzw. Gleichspannungsquelle - wie beispielsweise einem Akkumulator - zu trennen, um eine Brandgefahr des Fahrzeugs zu reduzieren, den Verbraucher bzw. die Spannungsquelle vor Beschädigung zu schützen und berührbare elektrisch leitfähige Teile zuverlässig stromfrei zu schalten.

Aus dem Stand der Technik ist hierfür eine Vielzahl von Vorrichtungen bekannt.

Beispielsweise lehren die Dokumente DE 44 13 847 A1 und DE 197 12 544 A1 jeweils eine Sicherheits- bzw. Abschalteinrichtung, welche ausgebildet ist, eine Spannungsquelle bei der Detektion eines Crashs mittels eines von einer Treibladung getriebenen Messers irreversibel von einem Verbraucher zu trennen, wobei hierbei eine die Spannungsquelle mit dem Verbraucher verbindende Leitung bzw. Sicherung irreversibel zerstört wird.

Weiter lehrt beispielsweise die DE 41 10 240 C1 eine Abschalteinrichtung, welche bei Erkennung eines über einen Leiter fließenden Überstroms die elektrische Verbindung über den Leiter trennt, indem eine Kontaktbrücke die elektrische Verbindung trennend geschalten wird, wobei die Kontaktbrücke elektromagnetisch oder pyrotechnisch ansteuerbar ist. Wird die Kontaktbrücke pyrotechnisch angesteuert, wird der Leiter ebenfalls irreversibel getrennt, sodass bei einer Instandsetzung ein teurer Austausch des Bauteils notwendig ist und die elektrische Verbindung nicht ohne Weiteres wiederhergestellt werden kann. Wird die Kontaktbrücke bei einem Überstromfall, bei welchem also ein hoher bzw. ein im Vergleich zu einem vorbestimmten Grenzwert zu hoher Strom fließt, elektromagnetisch angesteuert, kann es an der Kontaktbrücke zu Funkenbildung oder einem Lichtbogen kommen, durch welche der Leiter unter Umständen nicht sicher oder vergleichsweise langsam (beispielsweise ca. 5 ms) getrennt und die Kontaktbrücke beschädigt werden kann. Wird die elektrische Verbindung über den Leiter nicht sicher oder zu langsam getrennt, wird die Schaltung den Sicherheitsanforderungen insbesondere in Fahrzeugen nicht gerecht. Kommt es zu einer Beschädigung der Kontaktbrücke, liegt keine sichere reversible Schaltbarkeit vor, da die elektrisehe Verbindung durch eine solche Abschalteinrichtung eventuell nicht mehr hergestellt oder nicht mehr erneut getrennt werden kann.

Die vorgenannten Probleme vermeidend, schlägt die WO 2005/115805 A1 eine rein elektronische Abschaltvorrichtung vor, welche zur Unterbrechung der elektrischen Verbindung einen Hochstrom-Halbleiterschalter bzw. einen MOSFET aufweist. Dabei wird der Verbraucher jedoch nicht galvanisch von der Spannungsquelle getrennt, sodass es bei Überschreiten einer Durchschlagspannung dazu kommen kann, dass der Verbraucher wieder elektrisch mit der Spannungsquelle verbunden wird.

Der Erfindung liegt deshalb die Aufgabe zugrunde, die vorgenannten Nachteile zu überwinden und eine Trennschaltung vorzusehen, durch welche ein Verbraucher bei einem Crash- oder Fehlerfall und insbesondere bei einem Überstrom reversibel und sicher von einer Spannungsquelle getrennt werden kann.

Diese Aufgabe wird durch die Merkmalskombination gemäß Patentanspruch 1 gelöst.

Erfindungsgemäß wird daher eine Trennschaltung zur reversiblen galvanischen Trennung eines Verbrauchers von einer Gleichspannungsquelle vorgeschlagen, welche durch zumindest zwei elektrische Leiter miteinander verbunden sind. Dabei wird unter reversibel verstanden, dass die Trennung durch geeignete Ansteuerung der Trennschaltung rückgängig gemacht, die Verbindung zwischen dem Verbraucher und der Gleichspannungsquelle über die elektrischen Leiter also wiederhegestellt werden kann. Eine solche erfindungsgemäße Trennschaltung ist vorzugsweise für ein Fahrzeug und weiter vorzugsweise für ein elektrisch angetriebenes Fahrzeug vorgesehen. Die erfindungsgemäße Trennschaltung weist einen ersten Leistungselektronik-Schalter und einen zweiten Leistungselektronik-Schalter auf, welche jeweils als Feldeffekttransistor (FET) ausgebildet sind und ferner jeweils ausgebildet sind, einen durch die zumindest zwei Leiter zwischen dem Verbraucher und der Gleichspannungsquelle gebildeten Stromkreis lastfrei zu schalten. Weiter ist jeweils ein Schaltelement je Leiter vorgesehen, welches jeweils ausgebildet ist, den jeweiligen Leiter galvanisch zu unterbrechen. Zudem weist die erfindungsgemäße Trennschaltung eine Überstromerkennungseinheit auf, welche ausgebildet ist, einen über die Leiter fließenden Überstrom zu erkennen. Als Überstrom wird hierbei insbesondere ein Strom verstanden, welcher einen vorbestimmten Grenzwert über eine zulässige Dauer überschreitet und/oder welcher zumindest um einen vorbestimmten Faktor größer ist als der vorbestimmte Grenzwert. Ferner verfügt die Trennschaltung über eine Steuereinheit, welche ausgebildet ist, bei einem durch die Überstromerkennungseinheit erkannten Überstrom und/oder bei Empfang eines externen Signals, bei welchem es sich insbesondere um ein Crash-Signal handeln kann, welches beispielsweise durch einen CrashSensor generiert wird, den durch die zumindest zwei Leiter gebildeten Stromkreis mittels den Leistungselektronik-Schaltern lastfrei zu schalten und vorzugsweise unmittelbar anschließend den Verbraucher durch Unterbrechung der zumindest zwei und insbesondere durch Unterbrechung aller elektrischen Leiter mittels dem jeweiligen Schaltelement galvanisch von der Gleichspannungsquelle zu trennen. Dabei weisen die beiden Leistungselektronik-Schalter eine zueinander entgegengesetzte Durchlassrichtung auf, sodass der Stromkreis auch bei einem generatorischen Betrieb des Verbrauchers lastfrei schaltbar ist.

Unter galvanischer Trennung wird hierbei die Trennung durch Isolation verstanden.

Weiter ist vorzugsweise vorgesehen, dass die Trennschaltung ausgebildet ist, den Verbraucher schneller als 200 µs galvanisch von der Gleichspannungsquelle zu trennen.

Eine vorteilhafte Variante der Erfindung sieht vor, dass das das jeweilige Schaltelement ein Relais bzw. vorzugsweise jeweils ein Relais ist. Weiter vorzugsweise handelt es sich um ein elektromechanisches Relais, wodurch sich in einfacher und kostengünstiger Weise eine galvanische Trennung des Verbrauchers von der Gleichspannungsquelle bzw. eine galvanische Trennung der Lastseite der Trennschaltung realisieren lässt.

Die Leistungselektronik-Schalter sind vorzugsweise jeweils ein MOSFET und weiter insbesondere ein selbstsperrender n-Kanal MOSFET. Durch ein solches Bauelement ist keine galvanische Trennung der Lastseite möglich, wobei dennoch hohe Ströme zumindest kurzzeitig schaltbar und die Leiter somit zumindest kurzzeitig lastfrei-schaltbar sind, um die galvanische Trennung nach dem Lastfrei-Schalten mittels der Leistungselektronik-Schalter durch die jeweiligen die Leiter galvanisch auftrennenden Schaltelemente zu realisieren.

Eine vorteilhafte Ausführungsform sieht vor, dass die Leistungselektronik-Schalter in Reihe zu einem Schaltelement geschalten sind.

Um eine bidirektionale Funktionsweise der Trennschaltung zu ermöglichen, ist, wie bereits erwähnt, vorgesehen, dass die Trennschaltung einen ersten Leistungselektronik-Schalter und einen zweiten Leistungselektronik-Schalter aufweist. Dabei ist der erste Leistungselektronik-Schalter und der zweite Leistungselektronik-Schalter jeweils als FET (Feldeffekttransistor) ausgebildet, wobei die Durchlassrichtungen jeweils entgegengesetzt zueinander sind.

Daraus ergibt sich beispielsweise bei einem Elektromotor als Verbraucher auch die Möglichkeit den Elektromotor als Generator zu betreiben, sodass die Gleichspannungsquelle von dem als Generator betriebenen Elektromotor geladen werden kann.

Der erste und der zweite Leistungselektronik-Schalter können parallel zueinander verschaltet sein.

Gemäß einer besonders vorteilhaften Variante der Trennschaltung weist die Überstromerkennungseinheit zumindest einen Shunt auf, welcher vorzugsweise parallel zu einem der Leiter geschalten ist. Die Überstromerkennungseinheit ist ausgebildet, aus einer über den Shunt abfallenden Spannung einen über den Shunt fließenden Strom zu bestimmen und den über den Shunt fließenden Strom mit einem Grenzwert zu vergleichen und/oder einen dem über den Shunt fließenden Strom entsprechenden Wert signaltechnisch und insbesondere digital an die Steuereinheit zu übermitteln. Wird der Wert signaltechnisch an die Steuereinheit übermittelt, ist die Steuereinheit vorzugsweise ausgebildet, den über den Shunt fließenden Strom mit einem Grenzwert zu vergleichen. Weiter kann die Überstromerkennungseinheit und/oder die Steuereinheit ausgebildet sein, aus dem Vergleich des über den Shunt fließenden Stroms mit dem Grenzwert zu bestimmen, ob über den Leiter ein Überstrom bzw. ein unzulässiger Überstrom fließt.

Dabei können die Steuereinheit und die Überstromerkennungseinheit zumindest abschnittsweise integral miteinander ausgebildet sein. Beispielsweise kann eine Auswerteeinheit der Überstromerkennungseinheit zum Vergleich des über den Shunt fließenden Stroms mit dem Grenzwert in die Steuereinheit integriert sein.

Vorzugsweise sind/ist ein Low-Side-Treiber und/oder ein High-Side-Treiber zur Steuerung der Leistungselektronik-Schalters in die Steuereinheit integriert.

Eine weitere vorteilhafte Variante der Trennschaltung sieht vor, dass die Überstromerkennungseinheit ausgebildet ist, den über die Leiter fließenden Überstrom innerhalb von maximal 150 µs zu erkennen. Hierfür kann optional vorgesehen sein, dass die Steuereinheit ausgebildet ist, nach dem Erkennen des Überstroms den durch die zumindest zwei Leiter zwischen Gleichspannungsquelle und Verbraucher gebildeten Stromkreis mittels den Leistungselektronik-Schaltern innerhalb von maximal 50 µs lastfrei zu schalten. Weiter kann vorgesehen sein, dass die Steuereinheit ausgebildet ist, nach dem Lastfrei-Schalten des Stromkreises durch die Leistungselektronik-Schalter, die zumindest zwei und vorzugsweise alle elektrischen Leiter mittels dem jeweiligen Schaltelement innerhalb von maximal 10 ms zu schalten und dadurch galvanisch zu trennen.

Ein weiterer Aspekt der Erfindung betrifft eine Schaltbox mit einem Gehäuse, in welchem zumindest eine erfindungsgemäße Trennschaltung aufgenommen ist. Die Schaltbox ist ferner ausgebildet, reversibel in einem Stromkreis zwischen der Gleichspannungsquelle und dem Verbraucher geschalten zu werden, worunter verstanden wird, dass die Schaltbox zwischen der Gleichspannungsquelle und dem Verbraucher montiert und bei Bedarf wieder demontiert werden kann, wobei die zumindest eine Trennschaltung der Schaltbox eine elektrische Verbindung zwischen Gleichspannungsquelle und Verbraucher herstellen kann. Dabei wird die Schaltbox funktionstechnisch ausschließlich durch die zumindest eine Trennschaltung gebildet, sodass die Schaltbox also ausschließlich zum Schalten mittels der zumindest einen Trennschaltung vorgesehen ist.

Die Trennschaltung und insbesondere die Steuerelektronik kann dabei eine von der Gleichspannungsquelle unabhängige eigene Spannungsversorgung aufweisen, sodass die Steuerung der Trennschaltung bzw. das Schalten durch die Trennschaltung von der Gleichspannungsquelle unabhängig ist. Weiter kann die Trennschaltung Anschlüsse zur externen Stromversorgung der Steuerelektronik aufweisen, sodass die Schaltelemente und die Leistungselektronik-Schalter beispielsweise im Rahmen einer Reparatur oder Instandsetzung die Gleichspannungsquelle wieder mit dem Verbraucher verbindend schaltbar sind.

Ferner betrifft ein Aspekt der Erfindung ein Verfahren zur reversiblen galvanischen Trennung eines Verbrauchers von einer Gleichspannungsquelle insbesondere in einem Fahrzeug mit einer erfindungsgemäßen Trennschaltung bzw. einer erfindungsgemäßen Schaltbox, wobei der Verbrauch und die Gleichspannungsquelle durch zumindest zwei elektrische Leiter miteinander verbunden sind. Gemäß dem Verfahren wird ein über die Leiter fließender Strom durch die Überstromerkennungseinheit überwacht und mit einem Grenzwert verglichen. Bei einem Überschreiten des Stroms über den Grenzwert wird ein unzulässiger Überstrom erkannt, wobei hierunter ein unzulässiges Überschreiten verstanden wird, bei welchem der Strom den Grenzwert in unzulässiger Weise und beispielsweise um mehr als einen vorbestimmten Faktor oder länger als eine vorbestimmte Dauer überschreitet. Wird ein Überstrom erkannt oder wird ein externes Signal, wie beispielsweise das Crash-Signal, empfangen, wird der durch die zumindest zwei Leiter gebildete Stromkreis mittels den Leistungselektronik-Schaltern lastfrei geschalten und vorzugsweise unmittelbar anschließend der Verbraucher durch die Schaltelemente galvanisch von der Gleichspannungsquelle getrennt.

Das Verfahren ist reversibel, sodass die Verbindung durch Schalten der Leistungselektronik-Schalter und der Schaltelemente in einen leitenden Zustand wieder hergestellt werden kann. Zur Vermeidung von Lichtbögen und Funken ist dabei vorzugsweise vorgesehen, dass zunächst die Schaltelemente leitend geschalten werden und anschließend die bzw. der jeweilige Leistungselektronik-Schalter leitend geschalten wird.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schaltbox mit einer Trennschaltung;
- Fig. 2: eine Schaltbox mit einer weiteren Trennschaltung.

Die Figuren sind beispielhaft schematisch. Gleiche Bezugszeichen in den Figuren weisen auf gleiche funktionale und/oder strukturelle Merkmale hin.

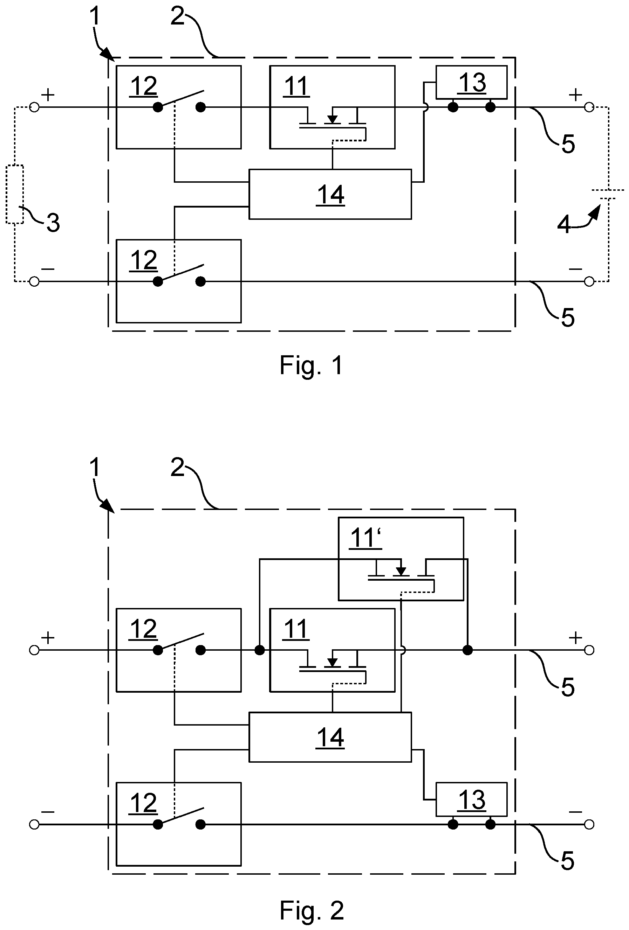

Figur 1 zeigt eine Trennschaltung 1, welche als Teil einer Schaltbox 2 in einem gestrichelt dargestellten Gehäuse aufgenommen ist. Dabei ist die Trennschaltung 1 über entsprechende Anschlüsse mit einer Batterie bzw. Akkumulator als Gleichspannungsquelle 4 und einem Verbraucher 3 verbunden, sodass mittels der Leiter 5 ein Stromkreis gebildet wird.

Kommt es zu einem unzulässig hohen, über die Leiter 5 bzw. allgemein zwischen der Gleichspannungsquelle 4 und dem Verbraucher 3 fließenden Strom, also einem Überstrom, kann es zu einer Schädigung des Verbrauchers 3 oder der Gleichspannungsquelle 4 sowie durch eine damit einhergehende Hitzeentwicklung zu einem Brand kommen.

Zur Vermeidung solcher Schäden und auch um beispielsweise in einem Crashfall einen sicheren Zustand erreichen zu können, soll die Verbindung zwischen Verbraucher 3 und Gleichspannungsquelle 4 sicher und reversibel getrennt werden können.

Wird daher von der Überstromerkennungseinheit 13 ein über die Leiter 5 fließender Überstrom erkannt oder erhält die Steuereinheit 14 ein Signal von außen bzw. ein externes Signal, wird zunächst die elektrische Verbindung zwischen dem Verbraucher 3 und der Gleichspannungsquelle 4 durch Schalten des Leistungselektronik-Schalter 11 getrennt, sodass über die Leiter 5 kein Strom mehr fließt. Fließt kein Strom mehr über die Leiter 5, diese sind also lastfrei, werden die Schaltelemente 12 von der Steuereinheit 14 die Verbindung physisch und somit galvanisch trennend geschalten. Dadurch, dass die Leiter 5 im Moment des Schaltens der Schaltelemente 12 lastfrei sind, kann es auch nicht zu Funkenbildung oder Lichtbögen kommen, sodass die Schaltelemente 12 beim Schaltvorgang nicht beschädigt werden und im Wesentlichen verschleißfrei sind.

Soll die elektrische Verbindung wieder hergestellt werden, können die Schaltelemente 12 wieder leitend geschalten werden, wobei diese dabei vorzugsweise lastfrei sind. Anschließend kann ein Schalten des Leistungselektronik-Schalters 11 erfolgen, wodurch die elektrische Verbindung zwischen Verbraucher 3 und Gleichspannungsquelle 4 wieder hergestellt wird, nachdem diese wieder galvanisch verbunden wurden.

Figur 2 zeigt eine erfindungsgemäße Trennschaltung 1, welche im Wesentlichen identisch zu der gemäß Figur 1 ist. Die Überstromerkennungseinheit 13 wurde auf eine alternative aber gleichwertige Weise entlang des anderen der beiden Leiter 5 platziert. Weiter könnten alternativ zwei Überstromerkennungseinheiten 13 vorgesehen sein, von welchen eine erste Überstromerkennungseinheit 13 gemäß Figur 1 und eine zweite Überstromerkennungseinheit 13 gemäß Figur 2 platziert ist, sodass die Überwachung bzw. ein Erkennen eines Überstroms redundant und mithin zuverlässiger erfolgen kann.

Weiter weist die Trennschaltung 1 gemäß Figur 2 zwei Leistungselektronik-Schalter 11, 11' auf, welche derart entgegengesetzt zueinander verschalten sind, dass ein bidirektionaler Betrieb der Trennschaltung 1 möglich ist. Ist der in Figur 2 nicht dargestellte Verbraucher 3 beispielsweise ein Elektromotor, kann dieser auch generatorisch bzw. als Generator betrieben werden, um eine nicht dargestellte Gleichspannungsquelle 4, bei welcher es sich beispielsweise um einen Akkumulator handelt, zu laden. Sowohl der erste Leistungselektronik-Schalter 11 als auch der zweite Leistungselektronik-Schalter 11' werden dabei durch die Steuereinheit 14 geschalten, wobei diese abhängig von der Betriebsart des Verbrauchers 3 oder grundsätzlich immer gleichzeitig angesteuert werden können.

## Patentansprüche

1. Trennschaltung (1) zur reversiblen galvanischen Trennung eines Verbrauchers (3) von einer Gleichspannungsquelle (4), welche durch zumindest zwei elektrische Leiter (5) miteinander verbunden sind, mit
einem ersten als Feldeffekttransistor ausgebildeten Leistungselektronik-Schalter (11) und einem zweiten als Feldeffekttransistor ausgebildeten Leistungselektronik-Schalter (11'), welche ausgebildet sind, einen durch die zumindest zwei Leiter (5) zwischen dem Verbraucher (3) und der Gleichspannungsquelle (4) gebildeten Stromkreis lastfrei zu schalten,
jeweils ein Schaltelement (12) je Leiter (5), welches jeweils ausgebildet ist, den jeweiligen Leiter (5) galvanisch zu unterbrechen,
eine Überstromerkennungseinheit (13), welche ausgebildet ist, einen über die Leiter (5) fließenden Überstrom zu erkennen
und eine Steuereinheit (14), welche ausgebildet ist, bei einem durch die Überstromerkennungseinheit (13) erkannten Überstrom und/oder bei Empfang eines externen Signals den durch die zumindest zwei Leiter (5) gebildeten Stromkreis mittels den Leistungselektronik-Schaltern (11, 11') lastfrei zu schalten und anschließend den Verbraucher (3) durch Unterbrechung der zumindest zwei elektrischen Leiter (5) mittels dem jeweiligen Schaltelement (12) galvanisch von der Gleichspannungsquelle (4) zu trennen,
wobei der erste Leistungselektronik-Schalter (11) und der zweite Leistungselektronik-Schalter (11') entgegengesetzte Durchlassrichtungen aufweisen, sodass der Stromkreis bei einem generatorischen Betrieb des Verbrauchers lastfrei schaltbar ist.

2. Trennschaltung nach Anspruch 1,
wobei das jeweilige Schaltelement (12) ein Relais ist.

3. Trennschaltung nach Anspruch 1 oder 2,
wobei die Leistungselektronik-Schalter (11, 11') jeweils ein MOSFET und weiter insbesondere ein selbstsperrender n-Kanal MOSFET sind.

4. Trennschaltung nach einem der vorhergehenden Ansprüche,
wobei die Leistungselektronik-Schalter (11, 11') in Reihe zu einem Schaltelement (12) geschalten sind.

5. Trennschaltung nach einem der vorhergehenden Ansprüche,
wobei die Überstromerkennungseinheit (13) zumindest einen Shunt aufweist,
und die Überstromerkennungseinheit (13) ausgebildet ist, aus einer über den Shunt abfallenden Spannung einen über den Shunt fließenden Strom zu bestimmen und den über den Shunt fließenden Strom mit einem Grenzwert zu vergleichen und/oder einen dem über den Shunt fließenden Strom entsprechenden Wert signaltechnisch an die Steuereinheit (14) zu übermitteln.

6. Trennschaltung nach einem der vorhergehenden Ansprüche,
wobei die Steuereinheit (14) und die Überstromerkennungseinheit (13) zumindest abschnittsweise integral miteinander ausgebildet sind.

7. Trennschaltung nach einem der vorhergehenden Ansprüche,
wobei ein Low-Side-Treiber und/oder ein High-Side-Treiber zur Steuerung der Leistungselektronik-Schalter (11, 11') in die Steuereinheit (14) integriert sind/ist.

8. Trennschaltung nach einem der vorhergehenden Ansprüche,
wobei die Überstromerkennungseinheit (13) ausgebildet ist, den über die Leiter (5) fließenden Überstrom innerhalb von maximal 150 µs zu erkennen,
und/oder wobei die Steuereinheit (14) ausgebildet ist, nach dem Erkennen des Überstroms den durch die zumindest zwei Leiter (5) gebildeten Stromkreis mittels den Leistungselektronik-Schaltern (11, 11') innerhalb von maximal 50 µs lastfrei zu schalten,
und/oder wobei die Steuereinheit (14) ausgebildet ist, nach dem Lastfrei-Schalten des Stromkreises durch die Leistungselektronik-Schalter (11, 11') die zumindest zwei elektrischen Leiter (5) mittels dem jeweiligen Schaltelement (12) innerhalb von maximal 10 ms galvanisch zu trennen.

9. Schaltbox (2) mit einem Gehäuse, in welchem zumindest eine Trennschaltung (1) nach einem der vorhergehenden Ansprüche aufgenommen ist,
wobei die Schaltbox (2) ausgebildet ist, reversibel in einem Stromkreis zwischen der Gleichspannungsquelle (4) und dem Verbraucher (3) geschalten zu werden und funktionstechnisch ausschließlich durch die zumindest eine Trennschaltung (1) gebildet wird.

10. Verfahren zur reversiblen galvanischen Trennung eines Verbrauchers (3) von einer Gleichspannungsquelle (4), welche durch zumindest zwei elektrische Leiter (5) miteinander verbunden sind, mit einer Trennschaltung (1) nach einem der Ansprüche 1 bis 8 oder einer Schaltbox (2) nach Anspruch 9,
wobei ein über die Leiter (5) fließender Strom durch die Überstromerkennungseinheit (13) überwacht und mit einem Grenzwert verglichen wird,
wobei bei einem unzulässigen Überschreiten des Stroms über den Grenzwert ein Überstrom erkannt wird,
wobei bei einem erkannten Überstrom oder bei einem externen Signal der durch die zumindest zwei Leiter (5) gebildete Stromkreis mittels der Leistungselektronik-Schalter (11, 11') lastfrei geschalten und anschließend der Verbraucher (3) durch die Schaltelemente (12) galvanisch von der Gleichspannungsquelle (4) getrennt wird.
